# EUROPÄISCHE PATENTANMELDUNG

(11) **EP 4 703 298 A1**
(43) Veröffentlichungstag der Anmeldung: **04.03.2026**
(21) Anmeldenummer: 25197814.4
(22) Anmeldetag: 25.08.2025
(51) Int. Cl.: B65G 1/04

(54) **LAGERANORDNUNG MIT EINEM BLOCKLAGER UND EINER BEHÄLTERAUF- UND -ABGABESTATION**

(30) Priorität: 28.08.2024 DE 102024124566
(71) Anmelder: Jungheinrich AG, 22047 Hamburg (DE)
(72) Erfinder: Morawietz, Timm, 66636 Tholey-Überroth (DE); Becker, Michael, 63512 Hainburg (DE); Cavelius, Jörg, 61118 Bad Vilbel (DE); Liebhaber, Markus, 61440 Oberursel (DE)
(74) Vertreter: Keil & Schaafhausen Patentanwälte PartGmbB

(57) **Zusammenfassung**

Die vorliegende Erfindung betrifft eine Lageranordnung (1) mit einem Blocklager (2) und einer Behälterauf- und Abgabestation (3), wobei das Blocklager (2) mehrere Behälteraufnahmeräume (15a) und einen unter den Behälteraufnahmeräumen (15a) angeordneten Beschickungsraum (4) aufweist, wobei in dem Beschickungsraum (4) mindestens ein Beschickungsfahrzeug (6) mit einem Hubmechanismus (19) angeordnet ist, wobei der Hubmechanismus (19) eine Transportposition, eine Übergabeposition und eine Hubposition aufweist,
wobei die Behälterauf- und Abgabestation (3) einen Beschickungsfahrzeugbereich (5) und einen Übergabebereich (9, 10) mit einer Übergabeeinrichtung (13) zum Zusammenwirken mit dem mindestens einen Beschickungsfahrzeug (6) aufweist, wobei die Übergabeposition in Schwerkraftrichtung auf eine Höhe der Übergabeeinrichtung (13) abgestimmt ist

Die Aufgabe der Erfindung ist es die Lageranordnung effizient zu gestalten.

Dazu weist die Übergabeeinrichtung (13) wenigstens ein ausfahrbares Element (20) aufweist, das von dem Übergabebereich (9, 10) in den Beschickungsfahrzeugbereich (5) ausfahrbar und in Schwerkraftrichtung verfahrbar ist.

## Beschreibung

Die vorliegende Erfindung betrifft eine Lageranordnung mit einem Blocklager und einer Behälterauf- und -abgabestation, wobei das Blocklager mehrere Behälteraufnahmeräume und einen unter den Behälteraufnahmeräumen angeordneten Beschickungsraum aufweist, wobei in dem Beschickungsfahrzeug mit jeweils einem Hubmechanismus angeordnet ist, wobei der Hubmechanismus eine Transportposition, eine Übergabeposition und eine Hubposition aufweist, und wobei die Behälterauf- und -abgabestation einen Beschickungsfahrzeugbereich und einen Übergabebereich mit einer Übergabeeinrichtung zum Zusammenwirken mit dem mindestens einen Beschickungsfahrzeug aufweist, wobei die Übergabeposition in Schwerkraftrichtung auf eine Höhe der Übergabeeinrichtung abgestimmt ist.

Die EP 3 782 932 A1 beschreibt eine Stapellageranordnung, bei der eine Behälterauf- und -abgabestation in einem Oval angeordnet ist, wobei im Inneren des Ovals Behälter von Beschickungsfahrzeugen auf die Behälterauf- und -abgabestation aufgegeben und von der Behälterauf- und -abgabestation auf die Beschickungsfahrzeuge übergeben werden. Zur Übergabe eines Behälters von dem Beschickungsfahrzeug auf die Behälterauf- und -abgabestation positioniert sich das Beschickungsfahrzeug neben einer Übergabeeinrichtung mit zwei Übergabefingern. Anschließend hebt das Beschickungsfahrzeug einen Behälter in die Übergabeposition und verfährt so, dass die Übergabefinger in Ausklinkungen einer Behälteraufnahme unterhalb des Behälters angeordnet sind. Der Behälter wird auf die Übergabefinger abgesetzt und das Beschickungsfahrzeug kann weitere Behälter transportieren.

In einem Blocklager, auch Blocklageranordnung, Stapellager oder Stapellageranordnung genannt, können Behälter in einer aufeinandergestapelten Form gelagert werden. Für jeden dieser Behälterstapel ist ein Behälteraufnahmeraum vorgesehen. Da die Behälter in einem Behälteraufnahmeraum aufeinander stehen, wird in Schwerkraftrichtung der zur Verfügung stehende Raum vollständig ausgenutzt. Die Behälteraufnahmeräume können auch relativ dicht benachbart angeordnet werden, so dass man auch quer zur Schwerkraftrichtung den zur Verfügung stehenden Raum sehr gut ausnutzen kann

Die Behälter dienen dazu, Gegenstände (Waren, Artikel, Produkte) aufzunehmen. Die Gegenstände können beispielsweise in einer Behälterauf- und -abgabestation in einen Behälter eingelagert werden. Danach wird der Behälter durch einen Beschickungsraum in einen Behälteraufnahmeraum überführt. Wenn der Gegenstand aus dem Behälter wieder entnommen werden soll, muss der Behälter aus dem Behälteraufnahmeraum entnommen, durch den Beschickungsraum transportiert und in die Behälterauf- und -abgabestation überführt werden. Dort ist ein Zugriff auf den Behälter, insbesondere ein Inneres des Behälters, von außen möglich.

Der Transport des Behälters durch den Beschickungsraum erfolgt durch ein Beschickungsfahrzeug (Shuttle). Das Beschickungsfahrzeug verfährt im Beschickungsraum auf Fahrwegen, die beispielsweise als Schienen ausgebildet sind. Zur Ein- und Auslagerung in einen Behälteraufnahmeraum oder aus einem Behälteraufnahmeraum heraus weist das Beschickungsfahrzeug einen Hubmechanismus auf. Der Hubmechanismus ist zwischen einer Transportposition, einer Übergabeposition und einer Hubposition verfahrbar. In der Transportposition kann das Beschickungsfahrzeug einen Behälter senkrecht zur Schwerkraftrichtung entlang der Fahrwege transportieren, während ein Behälter der Hubposition in den Behälteraufnahmeraum eingelagert oder aus diesem entnommen werden kann. Innerhalb des Beschickungsraumes, unterhalb der Behälteraufnahmeräume, verfährt der Hubmechanismus zwischen der Transportposition und der Hubposition. Bei einer Bewegung von der Transportposition in die Hubposition, oder umgekehrt, steht das Beschickungsfahrzeug still. In der Behälterauf- und -abgabestation kann der Hubmechanismus die Übergabeposition einnehmen.

Zwischen dem Beschickungsraum und den Behälteraufnahmeräumen ist eine Halteeinrichtung angeordnet, die zwei Positionen, eine Freigabeposition und eine Halteposition annehmen kann. In der Halteposition wird ein Behälter bzw. ein Behälterstapel in dem Behälteraufnahmeraum gehalten. Befindet sich die Halteeinrichtung in der Freigabeposition, ist es möglich, einen oder mehrere Behälter aus dem Behälteraufnahmeraum zu entnehmen, oder einen oder mehr Behälter in den Behälteraufnahmeraum einzuführen.

Eine Halteeinrichtung des Blocklagers wird beispielsweise in der EP 3 782 932 A1 beschrieben.

Die Aufgabe der vorliegenden Erfindung liegt darin, eine Lageranordnung vorzuschlagen, die einen geringen Platzbedarf bei einer guten Effizienz aufweist.

Diese Aufgabe wird durch die Merkmale des Anspruchs 1 gelöst.

Dazu weist die Übergabeeinrichtung wenigstens ein ausfahrbares Element auf, das von dem Übergabebereich in den Beschickungsfahrzeugbereich ausfahrbar und in Schwerkraftrichtung verfahrbar ist.

Bevor das Beschickungsfahrzeug in den Beschickungsfahrzeugbereich einfährt, ist das wenigstens eine ausfahrbare Element eingefahren. Das bedeutet, dass das ausfahrbare Element nicht in den Beschickungsfahrzeugbereich vorsteht, sondern außerhalb des Beschickungsfahrzeugbereichs angeordnet ist. Das Beschickungsfahrzeug samt Behälter fährt aus dem Beschickungsraum in den Beschickungsfahrzeugbereich. Dort hebt der Hubmechanismus, sofern benötigt, den Behälter in die Übergabeposition. Die Übergabeposition des Hubmechanismus kann dabei der Transportposition oder der Hubposition entsprechen, wobei die Übergabeposition vorzugsweise zwischen der Transportposition und der Hubposition angeordnet ist. Die Übergabeeinrichtung bzw. das wenigstens eine ausfahrbare Element erstreckt sich in den Beschickungsfahrzeugbereich, sodass es unterhalb des Behälters angeordnet ist. Durch Anheben des wenigstens einen ausfahrbaren Elementes wird der Behälter angehoben und somit vom Beschickungsfahrzeug gelöst. Nun wird das ausfahrbare Element eingefahren, sodass der Behälter aus dem Beschickungsfahrzeugbereich entnommen wird. Das wenigstens eine ausfahrbare Element samt Behälter wird abgesenkt, sodass der Behälter beispielsweise auf Fördertechnik abgelegt wird.

Der Begriff "Fördertechnik" beschreibt in der vorliegenden Anmeldung intralogistische Anordnungen, die zum Transport eines Behälters auf einer Ebene genutzt werden können. Einige beispielhafte, nicht abschließende Beispiele für Fördertechnik sind: Behälterfördertechnik, Rollenförderer, Bandförderer, Riemenförderer, Modulbandförderer und Kettenförderer.

Durch die Fördertechnik wird der Behälter zu einem Zielpunkt transportiert. Alternativ zur Abgabe des Behälters von dem Beschickungsfahrzeug an die Behälterauf- und -abgabestation kann auch ein Behälter von der Behälterauf- und -abgabestation auf das Beschickungsfahrzeug überführt werden. Dazu befindet sich ein leeres Beschickungsfahrzeug, ohne einen Behälter, in dem Beschickungsfahrzeugbereich und überführt der Hubmechanismus in die Übergabeposition. Die Übergabeeinrichtung nimmt einen Behälter von der Fördertechnik auf, wozu das wenigstens eine ausfahrbare Element mit dem Behälter angehoben wird. Durch ein Ausfahren des wenigstens einen ausfahrbaren Elementes wird der Behälter von der Fördertechnik abgehoben und in den Beschickungsfahrzeugbereich überführt, wo es auf dem Beschickungsfahrzeug abgesenkt wird. Nun wird das wenigstens eine ausfahrbare Element eingezogen, sodass es außerhalb des Beschickungsfahrzeugbereichs angeordnet ist. Das Beschickungsfahrzeug senkt den Hubmechanismus mit dem Behälter in die Transportposition, sodass das Beschickungsfahrzeug verfahren kann, um beispielsweise den Behälter ins Blocklager zu überführen.

Die Übergabeeinrichtung hebt den Behälter um wenige Zentimeter, beispielsweise 6cm, 3cm oder 1,5cm, an. Dies genügt um den Behälter von der Fördertechnik auf das Beschickungsfahrzeug oder umgekehrt zu überführen. Entsprechend klein kann die Übergabeeinrichtung ausgebildet werden.

Als ausfahrbares Element kann beispielsweise ein aus dem Intralogistikbereich bekanntes Lastaufnahmemittel eingesetzt werden, beispielsweise, wie es in der DE 10 2013 004 589 A1 beschrieben ist. Als ausfahrbares Element eignet sich beispielsweise ein Teleskopauszug.

Die Überführung des Hubmechanismus in die Übergabeposition führt dazu, dass der Behälter in einer zur Fördertechnik passenden Höhe (in Schwerkraftrichtung) angeordnet ist, sodass die Behälterauf- und -abgabestation während der Handhabung den Behälter nicht anheben oder absenken muss. Entsprechend kann auf eine weitere Höhenanpassung des Behälters, beispielsweise durch eine stationäre Hubeinrichtung, verzichtet werden. Die Behälterauf- und -abgabestation nutzt die Übergabe vom Beschickungsfahrzeug auf die Fördertechnik direkt zur Anordnung des Behälters auf der passenden Höhe. Dies erlaubt nicht nur eine Reduzierung des Platzbedarfs, sondern es entfällt eine zusätzliche Handhabungsaktion, was zu einer guten Effizienz führt.

Außerdem erlaubt die oben beschriebene Anordnung, dass das Beschickungsfahrzeug im Beschickungsfahrzeugbereich stehen bleiben kann und nur den Hubmechanismus betätigen muss. Dadurch kann innerhalb der Behälterauf- und -abgabestation auf Verfahrwege im Rahmen einer Behälterübergabe verzichtet werden. Es genügt also, dass der Beschickungsfahrzeugbereich so gestaltet ist, dass er ausreichend Platz für genau ein Beschickungsfahrzeug aufweist. Dies ermöglicht einen geringen Platzbedarf der Behälterauf- und -abgabestation.

Weiterhin kann der Beschickungsfahrzeugbereich direkt an den Beschickungsraum angeordnet werden, sodass die Behälterauf- und -abgabestation modular an bereits bestehende Blocklager angeordnet werden kann.

Vorzugsweise weist die Behälterauf- und -abgabestation zwei Übergabebereiche auf, zwischen denen zwei Beschickungsbereiche angeordnet sind. Einer der beiden Übergabebereiche kann beispielsweise zu Abgabe von einem Behälter auf die Behälterauf- und -abgabestation vorgesehen werden, als Behälterabgabestation, während der zweite Übergabebereich zur Aufgabe von einem Behälter von der Behälterauf- und -abgabestation auf das Beschickungsfahrzeug, als Behälteraufgabestation, genutzt werden kann. Somit ist folgender Ablauf möglich: Ein Beschickungsfahrzeug übergibt einen Behälter in der Behälteraufgabestation, verfährt leer zur Behälterabgabeposition, und nimmt einen Behälter an der Behälterabgabeposition auf. Dazu ist jeder der Übergabebereiche einem Beschickungsfahrzeugbereich zugeordnet, die in direktem örtlichem Zusammenhang stehen, um ein Zusammenwirken zwischen einem Beschickungsfahrzeug und der Behälterauf- und -abgabestation zu ermöglichen. Dadurch können Leerfahrten des Beschickungsfahrzeug bzw. Wege, die das Beschickungsfahrzeug leer zurücklegt, gering gehalten werden.

Vorzugsweise sind die beiden Beschickungsfahrzeugbereiche durch einen Verfahrweg miteinander verbunden. Die Verfahrwege können beispielsweise durch (Quer-)Schienen gebildet sein, die in gleicher Art und Weise im Beschickungsraum vorgesehen sind. Auf dem Verfahrweg kann das Beschickungsfahrzeug direkt von einem Beschickungsfahrzeugbereich zu dem andern Beschickungsfahrzeugbereich fahren, ohne das eigentliche Blocklager bzw. dessen Beschickungsraum queren zu müssen. Dazu können die beiden Beschickungsbereiche benachbart zueinander angeordnet werden. Entsprechend werden kurze Fahrwege erreicht.

Vorzugsweise weist die Behälterauf- und -abgabestation in einer Ebene senkrecht zur Schwerkraftrichtung eine U-Form auf, an dessen Endbereichen die Übergabebereiche angeordnet sind. Die Ebene senkrecht zur Schwerkraftrichtung entspricht einem Grundriss der Behälterauf- und -abgabestation. Folglich ist der Grundriss U-förmig. An den freien Endbereichen des "U", Enden, die in der schriftbildlichen Darstellung des "U" nach oben zeigen, sind die Übergabebereiche angeordnet. Die beiden Übergabebereiche sind durch Fördertechnik miteinander verbunden. Die Fördertechnik verbindet die beiden freien Endbereiche des "U" miteinander. In Fortführung der obigen Anordnung, wonach die beiden Beschickungsfahrzeugbereiche zwischen den Übergabebereichen angeordnet sind, erlaubt die U-Form kurze Verfahrwege des Beschickungsfahrzeuges zwischen den beiden Beschickungsfahrzeugbereichen. Weiterhin ist die Fördertechnik beispielsweise als Einbahnstraße ausgestaltet, was zu einer guten Effizienz führt.

Vorzugsweise sind oberhalb der Beschickungsfahrzeugbereiche Puffer-Behälteraufnahmeräume angeordnet. Die Funktionsweise der Puffer-Behälteraufnahmeräume entspricht der der Behälteraufnahmeräume des Blocklagers. Die Puffer-Behälteraufnahmeräume dienen als Puffer und werden vom Beschickungsfahrzeug aus dem jeweiligen Beschickungsfahrzeugbereich heraus bedient. Entsprechend übernimmt das Beschickungsfahrzeug die Ein- und Auslagerung von Behältern in bzw. aus den Puffer-Behälteraufnahmeräumen. Es entfällt der Einsatz weiterer Handhabungstechnik zur Bedienung der Puffer-Behälteraufnahmeräume. Dadurch können jederzeit im Puffer-Behälteraufnahmeraum gepufferte Behälter einfach auf die Fördertechnik der Behälterauf- und -abgabestation überführt werden, sodass stets ausreichend viele Behälter auf der Fördertechnik angeordnet ist und Leerlaufzeiten vermieden werden.

Vorzugsweise sind zwischen den Beschickungsfahrzeugbereichen und den Puffer-Behälteraufnahmeräumen Halteeinrichtungen angeordnet. Die Halteeinrichtungen der Puffer-Behälteraufnahmeräume entsprechen den Halteeinrichtungen des Blocklagers, sodass hier die gleichen Baugruppen eingesetzt werden können. Solche Halteeinrichtungen sind beispielsweise aus EP 4 238 895 A bekannt. Dies erlaubt eine einfache Montage und eine einfache modulare Anbindung der Behälterauf- und -abgabestation an bestehende Blocklager.

Vorzugsweise weist die Behälterauf- und -abgabestation eine Kommissionierstation auf. Die Kommissionierstation ist beispielsweise über eine Fördertechnik mit dem Übergabebereich verbunden, sodass vom Beschickungsfahrzeug auf die Behälterauf- und -abgabestation überführte Behälter zur Kommissionierstation verbracht werden können. Dort kann auf ein Inneres des Behälters zugegriffen werden, um Kommissionierungen durchzuführen. Anschließend wird der Behälter zum Übergabebereich überführt. Von dort aus kann der Behälter auf das Beschickungsfahrzeug und schließlich ins Blocklager eingeführt werden. Die Kommissionierstation ist beispielsweise an einem unteren Ende der U-Form (Querseite des "U") angeordnet. Dies erlaubt eine gewisse Puffer-Zone zwischen den Übergabebereichen und der Kommissionierstation, sodass Behälter zuverlässig an der Kommissionierstation bereitgestellt werden können.

Im Folgenden wird die vorliegende Erfindung anhand eines bevorzugten Ausführungsbeispiels näher beschrieben. Hierin zeigen:
- Fig. 1: eine schematische Ansicht einer Lageranordnung,
- Fig. 2: eine schematische Ansicht eines Beschickungsfahrzeuges mit einem Behälter in einem Übergabebereich,
- Fig. 3: eine schematische Seitenansicht des Beschickungsfahrzeuges mit einem Behälter in dem Übergabebereich,
- Fig. 4: eine schematische Ansicht eines Übergabebereichs mit einem Beschickungsfahrzeug,
- Fig. 5: eine schematische Ansicht eines Übergabebereiches.

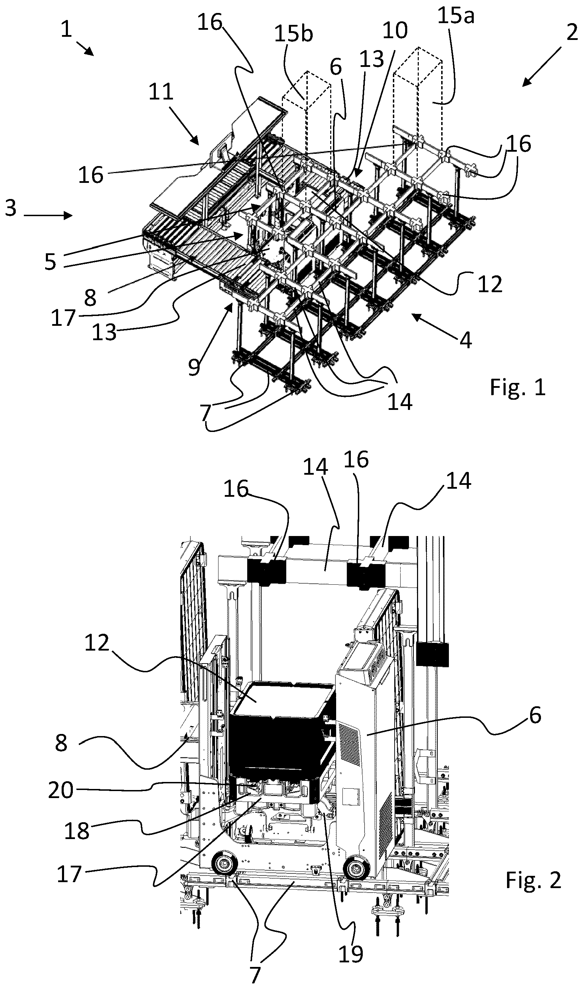

Fig. 1 zeigt eine Lageranordnung 1 mit einem Blocklager 2 und einer Behälterauf- und -abgabestation 3. Das Blocklager 2 weist einen Beschickungsraum 4 auf und die Behälterauf- und -abgabestation 3 weist zwei Beschickungsfahrzeugbereiche 5 auf. **In** jedem der beiden Beschickungsfahrzeugbereiche 5 sind zwei Beschickungsfahrzeuge 6 angeordnet, die auf Schienen 7 verfahrbar sind. Die Schienen 7 erstrecken sich sowohl in den Beschickungsfahrzeugbereichen 5 als auch im Beschickungsraum 4.

Neben den beiden Beschickungsfahrzeugbereichen 5 weist die Behälterauf- und -abgabestation 3, eine Fördertechnik 8 (beispielhaft dargestellt ist ein Rollenförder), einen ersten Übergabebereich 9, einen zweiten Übergabebereich 10 und eine Kommissionierstation 11 auf. Die beiden Beschickungsfahrzeugbereiche 5 sind durch Schienen 7 miteinander verbunden. Durch die Fördertechnik 8 können Behälter 12 von dem ersten Übergabebereich 9 über die Kommissionierstation 11 zum zweiten Übergabebereich10 verbracht werden. Dazu weist die Fördertechnik 8 einen U-förmigen Grundriss auf. Die Übergabebereiche 9, 10 sind an den freien Enden des "U" und die Kommissionierstation 11 an der Querseite des "U" angeordnet.

In der Kommissionierstation 11 kann auf ein Inneres der Behälter 12 zugegriffen werden. So können beispielsweise Artikel verschiedener Behälter 12 zu einer Bestellung kommissioniert werden. Alternativ oder zusätzlich können in der Kommissionierstation 11 Artikel in den Behälter 12 bzw. in das Innere des Behälters 12 eingebracht werden.

In den Übergabebereichen 9, 10 ist jeweils eine Übergabeeinrichtung 13 angeordnet. Die Übergabeeinrichtung 13 entnimmt einen Behälter 12 vom Beschickungsfahrzeug 6 und übergibt diesen auf die Fördertechnik 8, oder übergibt einen Behälter 12 von der Fördertechnik 8 auf ein Beschickungsfahrzeug 6.

Oberhalb des Beschickungsraumes 4 und der beiden Beschickungsfahrzeugbereiche 5 ist eine Rahmenstruktur 14 angeordnet, die eine Vielzahl von Behälteraufnahmeräumen 15a von dem Beschickungsraum 4 und von den Beschickungsfahrzeugbereichen 5 trennt. In Fig. 1 ist ein Behälterstapelraum 15a exemplarisch durch eine gestrichelte Line dargestellt. In den Behälteraufnahmeräumen 15a können nicht dargestellte Stapel von Behältern 12 angeordnet sein, die auf Halteeinrichtungen 16 an der Rahmenstruktur 14 aufliegen. Die Rahmenstruktur 14, die Behälteraufnahmeräume 15a und die Halteeinrichtungen 16 können beispielsweise der Lehre aus EP 3 782 930 A1 nachempfunden werden.

Fig. 2 zeigt das Beschickungsfahrzeug 6 mit einem Behälter 12 in einem der beiden Beschickungsfahrzeugbereiche 5. Der Behälter 12 liegt auf einer Behälteraufnahme 17 auf, wobei die Behälteraufnahme 17 Vertiefungen 18 aufweist. Die Behälteraufnahme 17 wird von einem Hubmechanismus 19 angehoben bzw. abgesenkt. Der Hubmechanismus 19 ist in Fig. 2 in einer Übergabeposition angeordnet. In dem vorliegenden Ausführungsbeispiel sind die ausfahrbaren Elemente als Teleskopauszüge 20 ausgebildet. In der Übergabeposition können sich die Teleskopauszüge 20 der Übergabeeinrichtung 13 in die Vertiefungen 18 erstrecken, um einen Behälter 12 vom Beschickungsfahrzeug 6 zu entnehmen oder einen Behälter 12 auf ein Beschickungsfahrzeug 6 zu übergeben.

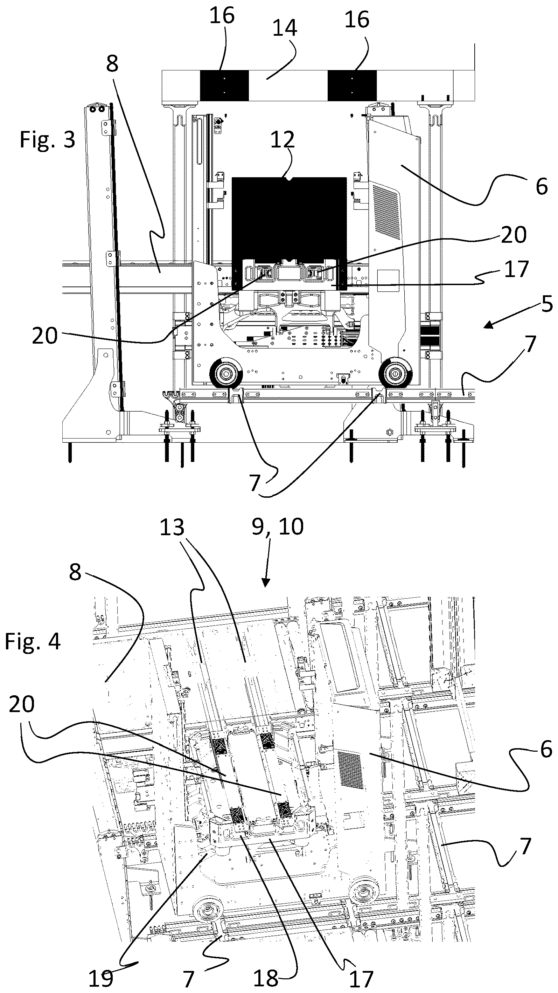

In Fig. 3 ist eine Seitenansicht der Fig. 2 gezeigt. Die Behälteraufnahme 17 bzw. der Hubmechanismus 19 ist in der Übergabeposition angeordnet, sodass die Behälteraufnahme 17 und die Fördertechnik 8 auf einer Ebene angeordnet sind. Entsprechend muss der Behälter 12 nur wenige Zentimeter, bspw. 6cm oder weniger, angehoben werden, um den Behälter 12 von der Behälteraufnahme 17 zu lösen oder den Behälter 12 auf die Behälteraufnahme 17 abzusetzen.

Fig. 4 zeigt das Beschickungsfahrzeug 6 in einem der beiden Beschickungsfahrzeugbereiche 5, wobei die Behälteraufnahme 17 bzw. der Hubmechanismus 19 in der Übergabeposition angeordnet sind. Die Teleskopauszüge 20 erstrecken sich in den Vertiefungen 18 der Behälteraufnahme 17.

Die Übergabeeinrichtung 13 weist ein nicht gezeigtes Hubwerk auf, das dazu eingerichtet ist, die Teleskopauszüge 20 in Schwerkraftrichtung zu bewegen und somit einen Behälter 12 anzuheben oder abzusenken. Die Übergabeeinrichtung 13 ist beispielsweise ein aus dem Intralogistikbereich bekanntes Lastaufnahmemittel.

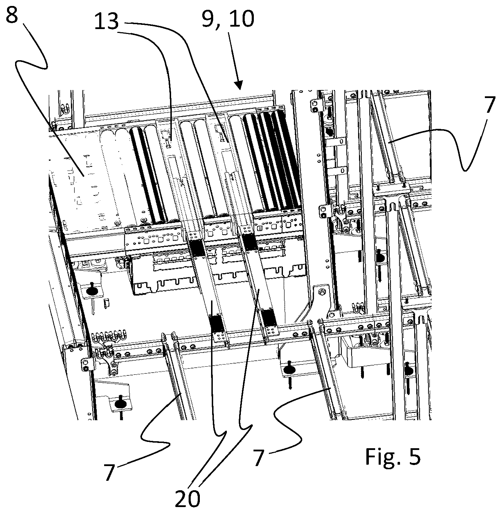

Fig. 5 zeigt den ersten oder zweiten Übergabebereich 9, 10 mit der Fördertechnik 8, der Übergabeeinrichtung 13 und den Schienen 7. Die Teleskopauszüge 20 sind in dieser Ansicht einem ausgefahrenen Zustand angeordnet. In dem ausgefahrenen Zustand erstrecken sich die Teleskopauszüge 20, sofern ein Beschickungsfahrzeug 6 im Beschickungsfahrzeugbereich 5 steht, in den Vertiefungen 18 der Behälteraufnahme 17. Wenn kein Beschickungsfahrzeug 6 im Beschickungsfahrzeugbereich 5 angeordnet ist bzw. im Beschickungsfahrzeugbereich 5 verfährt, sind die Teleskopauszüge 20 in einem kompakten Zustand. Im kompakten Zustand sind die Teleskopauszüge 20 vollständig von der Fördertechnik 8 umgeben, sodass die Teleskopauszüge 20 nicht in den Beschickungsfahrzeugbereich 5 ragen.

Im Folgenden wird die Funktionsweise der Lageranordnung 1 beschrieben.

Das Beschickungsfahrzeug 6 positioniert sich im Beschickungsraum 4 unterhalb eines der Behälteraufnahmeräume 15a. Dort hebt das Beschickungsfahrzeug 6 die Behälteraufnahme 17 durch den Hubmechanismus 19 an, bis die Behälteraufnahme 17 an einem untersten Behälter 12 eines im Behälteraufnahmeraum 15a angeordneten Behälterstapels anliegt. Der Behälterstapel wird von einer Halteeinrichtung 16 in einer Halteposition im Behälteraufnahmeraum 17 oberhalb des Beschickungsraumes 4 gehalten. Das Beschickungsfahrzeug 6 hebt den Behälterstapel an, sodass der Behälterstapel auf der Behälteraufnahme 17 ruht und die Halteeinrichtung 16 unbelastet ist. In dieser Position ist die Behälteraufnahme 17, bzw. der Hubmechanismus 19 in der Hubposition. Die Halteeinrichtung 16 wird nun von der Halteposition in die Freigabeposition überführt, sodass der auszulagernde Behälter 12 an der Halteeinrichtung 16 vorbei abgesenkt werden kann. Sobald der auszulagernde Behälter 12 an der Halteeinrichtung 16 vorbei ist, wird die Halteeinrichtung 16 in die Halteposition überführt und der Behälterstapel oberhalb des auszulagernden Behälters 12 auf die Halteeinrichtung 16 abgesenkt. Der auszulagernde Behälter 12 ruht nun auf der Behälteraufnahme 17, während der verbleibende Behälterstapel auf der Halteeinrichtung 16 aufliegt. Der Hubmechanismus 19 wird in eine Transportposition abgesenkt, sodass der Behälter 12 durch den Beschickungsraum 4 und den Beschickungsfahrzeugbereich 5 transportiert werden kann. Das Beschickungsfahrzeug 6 ist weiterhin dazu ausgestaltet, zwei Behälter 12 gleichzeitig zu transportieren. Dazu entnimmt das Beschickungsfahrzeug 6 die beiden Behälter 12 entweder aus einem Behälteraufnahmeraum 15a oder aus zwei verschiedenen Behälteraufnahmeräumen 15a.

Das Beschickungsfahrzeug 6 mit Behälter 12 verfährt auf Schienen 7 durch den Beschickungsraum 4 in einen der beiden Beschickungsfahrzeugbereiche 5. Dort kann der Behälter 12 entweder in den Puffer-Behälteraufnahmeraum 15b eingebracht oder auf die Fördertechnik 8 überführt werden.

Zum Einbringen des Behälters 12 in den Puffer- Behälteraufnahmeraum 15b positioniert sich das Beschickungsfahrzeug 6 unterhalb des Puffer-Behälteraufnahmeraumes 15b im Beschickungsfahrzeugbereich 5 und hebt den Behälter 12 an, bis der Behälter 12 an einem im Puffer-Behälteraufnahmeraum 15b angeordneten Behälter 12 anliegt. Der im Puffer-Behälteraufnahmeraum 15b angeordnete Behälter 12 wird von einer Halteeinrichtung 16 gehalten, die in gleicher Art und Weise funktioniert wie die Halteeinrichtung 16 in den Behälteraufnahmeräumen 15a. Das Beschickungsfahrzeug 6 hebt den einzulagernden, zu puffernden Behälter 12 und den im Puffer-Behälteraufnahmeraum 15b angeordneten Behälter 12 an, sodass die Halteeinrichtung 16, auf der der im Puffer-Behälteraufnahmeraum 15b angeordnete Behälter 12 vom Beschickungsfahrzeug 6 getragen wird. Entsprechend kann die Halteeinrichtung 16 von der Halteposition in die Freigabeposition überführt werden. Der einzulagernde Behälter 12 wird an der Halteeinrichtung 16 vorbei in den Puffer-Behälteraufnahmeraum 15b überführt. In der Zwischenzeit wurde die Halteeinrichtung 16 aus der Freigabeposition in die Halteposition überführt. Nun kann der neue unterste Behälter 12 des Behälterstapels auf die Halteeinrichtung 16 abgesetzt werden.

Zur Übergabe des Behälters 12 vom Beschickungsfahrzeug 6 auf die Fördertechnik 8 positioniert sich das Beschickungsfahrzeug 6 im Beschickungsfahrzeugbereich 5. Dort hebt das Beschickungsfahrzeug 6 den Behälter 12 an, sodass der Hubmechanismus 19 bzw. die Behälteraufnahme 17 in der Übergabeposition angeordnet ist. Die Teleskopauszüge 20 fahren aus und erstrecken sich in den Vertiefungen 18 der Behälteraufnahme 17. Nun hebt die Übergabeeinrichtung 13 die Teleskopauszüge 20 und den Behälter 12 an. Wenn der Behälter 12 von der Behälteraufnahme 17 gelöst ist, fahren die Teleskopauszüge 20 ein, sodass der Behälter 12 im Übergabebereich 9, 10 oberhalb der Fördertechnik 8 angeordnet ist. Dort werden die Teleskopauszüge 20 und der Behälter 12 abgesenkt, wodurch der Behälter 12 auf der Fördertechnik 8 aufliegt. Der Behälter 12 kann anschließend durch die Fördertechnik 8 gehandhabt werden.

Je nach Ausgestaltung kann das Beschickungsfahrzeug 6 einen, zwei, drei oder vier Behälter 12 gleichzeitig transportieren, einlagern und auslagern. Die Behälter 12 werden gestapelt und/oder nebeneinander im Beschickungsfahrzeug 6 angeordnet. Das Beschickungsfahrzeug 6 kann mehrere Behälter 12 ebenfalls aus unterschiedlichen Behälteraufnahmeräumen 15a oder Puffer- Behälteraufnahmeräumen 15b entnehmen und dort einlagern.

Im vorliegenden Ausführungsbeispiel können nur Behälter 12, die auf der Behälteraufnahme 17 angeordnet sind, auf die Behälterauf- und -abgabestation 3 übergeben werden. Entsprechend werden Behälter 12, die nicht direkt auf der Behälteraufnahme 17 angeordnet sind, in den Puffer-Behälteraufnahmeraum 15b eingebracht und dort gepuffert. Das Beschickungsfahrzeug 6 kann die Behälter 11 aus dem Puffer-Behälteraufnahmeraum 15b entnehmen, um die Behälter 11 durch die Übergabeeinrichtung 13 auf die Fördertechnik 8 zu übergeben. Dazu kann das Beschickungsfahrzeug 6 während der Entnahme des Behälters 12 aus dem Puffer-Behälteraufnahmeraum 15b und der anschließenden Übergabe durch die Übergabeeinrichtung 13 stehen bleiben. Es wird hierbei nur die Behälteraufnahme 17 bzw. der Hubmechanismus 19 und der Behälter 12 bewegt. Das erlaubt eine gute Effizienz.

Im vorliegenden Ausführungsbeispiel wird ein Behälter 12 ausgehend vom ersten Beschickungsfahrzeugbereich 5 in den ersten Übergabebereich 9 übergeben. Anschließend verfährt das Beschickungsfahrzeug 6 über die Schiene 7 zum zweiten Beschickungsfahrzeugbereich 5. Dort wird ein Behälter 12 vom zweiten Übergabebereich 10 an das Beschickungsfahrzeug 6 übergeben. Dadurch werden kurze Wege erreicht, die das Beschickungsfahrzeug 6 ohne Behälter 12 zurücklegt.

In dem Puffer-Behälteraufnahmeraum 15b können Behälter 12 zwischengelagert werden. Dadurch werden kurze Wege und Transportzeiten zwischen dem Puffer-Behälteraufnahmeraum 15b und der Kommissionierstation 11 erreicht

### Bezugszeichenliste

- 1: Lageranordnung
- 2: Blocklager
- 3: Behälterauf- und -abgabestation
- 4: Beschickungsraum
- 5: Beschickungsfahrzeugbereich
- 6: Beschickungsfahrzeug
- 7: Schiene
- 8: Fördertechnik
- 9: erster Übergabebereich
- 10: zweiter Übergabebereich
- 11: Kommissionierstation
- 12: Behälter
- 13: Übergabeeinrichtung
- 14: Rahmenstruktur
- 15a: Behälteraufnahmeraum
- 15b: Puffer-Behälteraufnahmeraum
- 16: Halteeinrichtung
- 17: Behälteraufnahme
- 18: Vertiefung
- 19: Hubmechanismus
- 20: Teleskopauszüge

## Patentansprüche

1. Lageranordnung (1) mit einem Blocklager (2) und einer Behälterauf- und -abgabestation (3), wobei das Blocklager (2) mehrere Behälteraufnahmeräume (15a) und einen unter den Behälteraufnahmeräumen (15a) angeordneten Beschickungsraum (4) aufweist, wobei in dem Beschickungsraum (4) mindestens ein Beschickungsfahrzeug (6) mit einem Hubmechanismus (19) angeordnet ist, wobei der Hubmechanismus (19) eine Transportposition, eine Übergabeposition und eine Hubposition aufweist, und
wobei die Behälterauf- und -abgabestation (3) einen Beschickungsfahrzeugbereich (5) und einen Übergabebereich (9, 10) mit einer Übergabeeinrichtung (13) zum Zusammenwirken mit dem mindestens einen Beschickungsfahrzeug (6) aufweist, wobei die Übergabeposition in Schwerkraftrichtung auf eine Höhe der Übergabeeinrichtung (13) abgestimmt ist,
**dadurch gekennzeichnet, dass** die Übergabeeinrichtung (13) wenigstens ein ausfahrbares Element (20) aufweist, das von dem Übergabebereich (9, 10) in den Beschickungsfahrzeugbereich (5) ausfahrbar und in Schwerkraftrichtung verfahrbar ist.

2. Lageranordnung (1) nach Anspruch 1, wobei die Behälterauf- und -abgabestation (3) zwei Übergabebereiche (9, 10) aufweist, zwischen denen zwei Beschickungsfahrzeugbereiche (5) angeordnet sind.

3. Lageranordnung (1) nach Anspruch 2, wobei das die beiden Beschickungsfahrzeugbereiche (5) durch einen Verfahrweg miteinander verbunden sind.

4. Lageranordnung (1) nach einem der Ansprüche 1 bis 3, wobei Behälterauf- und -abgabestation (3) in einer Ebene senkrecht zur Schwerkraftrichtung eine U-Form aufweist, an dessen Endbereichen die Übergabebereiche (9, 10) angeordnet sind.

5. Lageranordnung (1) nach einem der Ansprüche 1 bis 4, wobei oberhalb der Beschickungsfahrzeugbereiche (5) Puffer-Behälteraufnahmeräume (15b) angeordnet sind.

6. Lageranordnung (1) nach Anspruch 5, wobei zwischen den Beschickungsfahrzeugbereichen (5) und den Puffer-Behälteraufnahmeräume (15b) Halteeinrichtungen (16) angeordnet sind.

7. Lageranordnung (1) nach einem der Ansprüche 1 bis 6, wobei die Behälterauf- und -abgabestation (3) eine Kommissionierstation (11) aufweist.
